# EUROPÄISCHE PATENTANMELDUNG

(11) **EP 4 656 266 A1**
(43) Veröffentlichungstag der Anmeldung: **03.12.2025**
(21) Anmeldenummer: 24178619.3
(22) Anmeldetag: 28.05.2024
(51) Int. Cl.: B01D 24/36, B01D 24/46, B01D 24/16, B01D 24/38

(54) **SANDFILTER UND VERFAHREN ZUM BETREIBEN DESSELBEN**

(71) Anmelder: Schneider, Valeri, 6300 Zug (CH); Sutyaginskiy, Evgeny, 53721 Siegburg (DE); Dück, Dietrich, 53639 Königswinter (DE); Turevskyy, Sergiy, 53773 Hennef (DE)
(72) Erfinder: SCHNEIDER, Valeri, 6300 Zug (CH); SUTYAGINSKIY, Evgeny, 53721 Siegburg (DE); DÜCK, Dietrich, 53639 Königswinter (DE); TUREVSKYY, Sergiy, 53773 Hennef (DE)
(74) Vertreter: KBN IP Patentanwälte Partnerschaft mbB

(57) **Zusammenfassung**

Die Erfindung betrifft einen Sandfilter zur Entfernung von Feststoffen aus einem Schmutzwasserstrom, umfassend einen aufrecht stehenden Behälter (1) mit einem unteren, einem mittleren und einem oberen Bereich (10, 11, 12), wobei der untere und mittlere Bereich (10, 11) mit einem partikelförmigen Filtermedium (2) befüllt sind und der obere Bereich (12) gefiltertes Wasser (3) enthält, das über einen Überlauf (13) abführbar ist und wobei ein Zulaufrohr (4) zum Einbringen des Schmutzwasserstroms in den Behälter (1) vorgesehen ist, welches im Übergang zwischen dem unteren und mittleren Bereich (10, 11) endet und ein zentrales, sich vom unteren bis in den oberen Bereich erstreckendes Steigrohr (5) mit einer Pumpeinrichtung (6) für die Förderung von Filtermedium (2) aus dem unteren Bereich (10) in einen am oberen Ende (50) des Steigrohrs (5) angeordneten Wäscher (7) vorgesehen ist, mittels dessen das im Steigrohr (5) geförderte Filtermedium (2) von aus dem oberen Bereich (12) entnehmbarem gefilterten Wasser (3) waschbar ist, dergestalt, dass das gewaschene Filtermedium auf den mittleren Bereich (11) zurückführbar und abgewaschene Schmutzpartikel über einen Waschwasserablauf (14) austragbar sind, wobei die Pumpeinrichtung (6) von einer Wasserstrahlpumpe mit einer vertikal aufwärts in das Steigrohr (5) gerichteten Wasserstrahldüse (60) ausgebildet ist, wobei die Wasserstrahldüse (60) über eine Hochdruck-Wasserpumpe (61) und eine Entnahmeleitung (62) für gefiltertes Wasser (3) mit dem oberen Bereich (12) kommuniziert und mit gefiltertem Wasser (3) beaufschlagbar ist. Es wird ferner auch ein Verfahren zum Betreiben eines derartigen Sandfilters angegeben.

## Beschreibung

Die Erfindung betrifft einen Sandfilter zur Entfernung von Feststoffen aus einem Schmutzwasserstrom, umfassend einen aufrecht stehenden Behälter mit einem unteren, einem mittleren und einem oberen Bereich, wobei der untere und mittlere Bereich mit einem partikelförmigen Filtermedium befüllt sind und der obere Bereich gefiltertes Wasser enthält, das über einen Überlauf abführbar ist und wobei ein Zulaufrohr zum Einbringen des Schmutzwasserstroms in den Behälter vorgesehen ist, welches im Übergang zwischen dem unteren und mittleren Bereich endet und ein zentrales, sich vom unteren bis in den oberen Bereich erstreckendes Steigrohr mit einer Pumpeinrichtung für die Förderung von Filtermedium aus dem unteren Bereich in einen am oberen Ende des Steigrohrs angeordneten Wäscher vorgesehen ist, mittels dessen das im Steigrohr geförderte Filtermedium von aus dem oberen Bereich entnehmbarem gefilterten Wasser waschbar ist, dergestalt, dass das gewaschene Filtermedium auf den mittleren Bereich zurückführbar und abgewaschene Schmutzpartikel über einen Waschwasserablauf austragbar sind, wobei die Pumpeinrichtung von einer Wasserstrahlpumpe mit einer vertikal aufwärts in das Steigrohr gerichteten Wasserstrahldüse ausgebildet ist.

Ferner betrifft die Erfindung auch ein Verfahren zum Betreiben eines Sandfilters zur Entfernung von Feststoffen aus einem Schmutzwasserstrom, der einen aufrecht stehenden Behälter mit einem unteren, einem mittleren und einem oberen Bereich umfasst, wobei der untere und mittlere Bereich mit einem partikelförmigen Filtermedium befüllt sind und der obere Bereich gefiltertes Wasser enthält, das über einen Überlauf abgeführt wird und wobei der Schmutzwasserstrom in den Übergang zwischen dem unteren und mittleren Bereich eingebracht wird und in Richtung des oberen Bereiches durch das Filtermedium aufsteigt und das Filtermedium in entgegengesetzter Richtung zum unteren Bereich hin absinkt und über ein zentrales, sich vom unteren bis in den oberen Bereich erstreckendes Steigrohr aus dem unteren Bereich in einen an einem oberen Ende des Steigrohrs angeordneten Wäscher gefördert wird, in welchem das im Steigrohr geförderte Filtermedium von aus dem oberen Bereich entnommenem Wasser gewaschen wird, dergestalt, dass das gewaschene Filtermedium auf den mittleren Bereich zurückgeführt und abgewaschene Schmutzpartikel über einen Waschwasserablauf ausgetragen werden, wobei die Förderung des Filtermediums im Steigrohr mit einem vertikal aufwärts in das Steigrohr gerichteten Wasserstrahl bewirkt wird.

Sandfilter und Verfahren der eingangs genannten Art sind bekannt und werden beispielsweise zur Reinigung und Aufbereitung von Trinkwasser, für industrielle Prozesse, für das Abwasserrecycling und die Abwasseraufbereitung verwendet. Sie stellen eine Weiterentwicklung einfacher Bauformen von Sandfiltern dar, die periodisch durch Umkehrung der Durchströmungsrichtung rückgespült werden müssen, um zurückgehaltene Feststoffe auszutragen. Dies beruht darauf, dass sie einen kontinuierlichen Betrieb ermöglichen, bei welchem das zugeführte Schmutzwasser durch das Filtermedium nach oben aufsteigt und zugleich das Filtermedium kontinuierlich nach unten absinkt und durch das Steigrohr in einen Wäscher gefördert wird, in welchem das Filtermedium gereinigt und nachfolgend von oben auf das übrige vorhandene Filtermedium absinkt, sodass ein Kreislaufprozess geschaffen wird, in dem sich der Sandfilter kontinuierlich regeneriert.

Übliche Bauformen derartiger regenerativer Sandfilter verfügen üblicherweise über mit Druckluft betriebene Mammutpumpen als Pumpeinrichtung für die Förderung des Filtermediums im Steigrohr, die den verschmutzten Sand aus dem unteren Bereich mithilfe von Druckluft nach oben in den Wäscher fördern. Ein Beispiel eines solchen Sandfilters ist Gegenstand der WO 94/22547A1. Nachteilig bei derartigen, mit Druckluft betriebenen Einrichtungen ist neben dem Aufwand für die Bereitstellung eines entsprechenden Druckluftstromes die mögliche Kontamination des gefilterten Wassers mit im Druckluftstrom mitgeführtem Öl aus Kompressoren sowie der mit dem Betrieb derartiger Anordnungen verbundene Energieverbrauch und die Geräuschentwicklung benötigter Kompressoren. Zudem erfolgt die gewünschte Reinigung des Filtermediums, üblicherweise Sand, bei mit druckluftbetriebenen Anlagen nahezu ausschließlich im Wäscher, was entsprechend aufwändige Konstruktionen und vergleichsweise lange Verweildauern des Filtermediums im Wäscher bedingt.

Aus der EP 0 650 389 A1 ist ein kontinuierlich regenerierender Sandfilter bekannt, der zusätzlich zur Förderung des Filtermediums mit Druckluft einen Anteil an gefiltertem Wasser dem aus dem unteren Bereich entnommenen Filtermedium vor Eintritt in das Steigrohr beimischt, wodurch eine Schlämme für den Eintritt in das Steigrohr gebildet wird, die die Reinigung im Wäscher verbessern und auch die Förderleistung im Steigrohr erhöhen soll. Mit einer solchen Vorrichtung werden die mit dem Einsatz von Druckluft verbundenen Nachteile jedoch weiterhin nicht überwunden.

Die DE 2 040 909 A1 schlägt eine kontinuierlich arbeitende Querstrom-Filtervorrichtung vor, bei der das Filtermedium mittels aufwärts in das Steigrohr gerichteter Wasserstrahldüsen in den oberen Bereich gefördert wird, wozu jedoch große Mengen an extern zugeführten Wasser erforderlich sind und zudem der Austrag der von dem Filtermedium abgewaschener Schmutzpartikel über horizontale Ringleitungen im mittleren Bereich bewirkt wird und das gefilterte Wasser durch eine Querströmung ausschließlich in äußeren Randbereichen des Filters aufgefangen wird. Dazu werden mit Poren versehene durchlässige Wände benötigt, die anfällig für Verstopfung sind, sodass sich dieser Bautyp in der Praxis nicht durchgesetzt hat.

Aufgabe der vorliegenden Erfindung ist es, einen Sandfilter sowie ein Verfahren zum Betreiben desselben vorzuschlagen, welche die Nachteile des Standes der Technik überwinden und trotz einfachem Aufbau eine effektive Reinigung eines Schmutzwasserstroms von mitgeführten Feststoffen ermöglichen.

Zur Lösung der gestellten Aufgabe wird erfindungsgemäß ein Sandfilter gemäß den Merkmalen des Patentanspruchs 1 vorgeschlagen.

Ein Verfahren zum Betreiben eines Sandfilters gemäß der Erfindung ist Gegenstand des Patentanspruchs 8.

Vorteilhafte Ausgestaltungen und Weiterbildungen der Erfindung sind Gegenstand der abhängigen Ansprüche.

Der erfindungsgemäße Vorschlag eines Sandfilters sieht vor, dass die Wasserstrahldüse über eine Hochdruck-Wasserpumpe und eine Entnahmeleitung für gefiltertes Wasser mit dem oberen Bereich kommuniziert und mit gefiltertem Wasser beaufschlagbar ist.

Erfindungsgemäß wird somit vorgesehen, dass die mit einer vertikal aufwärts in das Steigrohr gerichteten Wasserstrahldüse arbeitende Pumpeinrichtung bzw. Wasserstrahlpumpe vorzugsweise ausschließlich mit gefiltertem Wasser aus dem oberen Bereich des erfindungsgemäßen Sandfilters beaufschlagt wird.

Auf diese Weise wird zunächst einmal die Notwendigkeit einer Druckluftversorgung durch den vollständigen Verzicht auf eine mit Druckluft arbeitende Pumpeinrichtung eliminiert, sodass es nicht mehr zu einem Übertritt von Öl aus der Druckluft in das gefilterte Wasser kommen kann.

Zudem lässt sich eine Hochdruck-Wasserpumpe effizient und mit geringer Geräuschentwicklung betreiben, wobei das aus dem oberen Bereich entnommene gefilterte Wasser in nur geringen Mengen benötigt wird, um einen vertikal aufwärts in das Steigrohr gerichteten Wasserstrahl hohen Drucks zu erzeugen, der für eine gute Förderwirkung benötigt wird.

Als weiterer Effekt der erfindungsgemäßen Ausgestaltung erfährt das im Steigrohr geförderte Filtermedium durch den Kontakt mit unter hohem Druck versprühtem gefilterten Wasser aus der Wasserstrahldüse bereits während des Durchgangs durch das Steigrohr eine intensive Umströmung und Abreinigung von anhaftenden Schmutzpartikeln, sodass die am oberen Ende des Steigrohrs stattfindende Waschung des Filtermediums im Wäscher nur noch entsprechend kurzzeitig und weniger intensiv ausfallen muss.

Die Entnahmeleitung, die das gefilterte Wasser aus dem oberen Bereich über die Hochdruck-Wasserpumpe bis zur Wasserstrahldüse fördert, kann wahlweise innerhalb oder außerhalb des aufrechtstehenden Behälters angeordnet sein.

Nach einem Vorschlag der Erfindung ist der Behälter im unteren Bereich kegelförmig zu einer unterseitigen Spitze hin verjüngend ausgebildet und die Wasserstrahldüse ist im Bereich der unterseitigen Spitze angeordnet, was einen besonders gleichmäßigen und kontinuierlichen Förderbetrieb in das Steigrohr sicherstellt.

Die Wasserstrahldüse kann nach einem weiteren Vorschlag der Erfindung insbesondere nach Art einer Venturi-Düse ausgebildet sein, wobei das Steigrohr unter Belassung eines Eintrittsraumes für Filtermedium von der Wasserstrahldüse beabstandet ist, d. h. der aus der Wasserstrahldüse austretende Wasserstrahl gelangt über eine gewisse Strecke, die beispielsweise das 5-100-fache des durchschnittlichen Partikeldurchmessers des eingesetzten Filtermediums betragen kann, im Freiflug in den Eintrittsbereich des Steigrohrs, sodass entsprechende Mengen von Filtermedium mitgerissen und in das Steigrohr gefördert werden. Zur Sicherstellung einer guten Förderwirkung verjüngt sich in Eintrittsrichtung des Wasserstrahls betrachtet das Steigrohr zunächst konisch, um sich anschließend bis zu einem bis zum Wäscher reichenden zylindrischen Rohrabschnitt zu erweitern.

Nach einem weiteren Vorschlag der Erfindung kann benachbart zur Wasserstrahldüse eine schaltbare Sprühleitung vorgesehen sein, die mit gefiltertem Wasser aus der Entnahmeleitung beaufschlagbar ist, d. h. das zur schaltbaren Sprühleitung geleitete gefilterte Wasser wird aus der Entnahmeleitung über eine entsprechende Ventilanordnung abgezweigt. Das aus der schaltbaren Sprühleitung über entsprechende Sprühdüsen austretende Wasser kann dazu genutzt werden, eventuell in den tiefsten Schichten des Filtermediums im unteren Bereich auftretende Verklebungen, Verblockungen, etc. aufzulösen, damit sie sodann vom Wasserstrahl der Wasserstrahldüse in das Steigrohr befördert werden können.

Die Sprühleitung kann insbesondere ringförmig um die Wasserstrahldüse verlaufend angeordnet sein.

Für die Steigerung der Effizienz der innerhalb des Steigrohrs vom aus der Wasserstrahldüse austretenden Wasserstrahl bereits bewirkten Reinigung des Filtermediums kann nach einem weiteren Vorschlag der Erfindung das Steigrohr bereichsweise mit radial innenseitig vorstehenden Mischern ausgebildet sein, die für zusätzliche Turbulenzen in der Strömung des Filtermediums im Steigrohr sorgen, was die Trennung der Schmutzpartikel von den einzelnen Partikeln des Filtermediums fördert.

Die Beaufschlagung der Wasserstrahldüse mit innerhalb des Sandfilters gefiltertem gereinigten Wasser kann nach einem weiteren Vorschlag der Erfindung insbesondere dadurch realisiert werden, dass die Entnahmeleitung mit dem Überlauf für gefiltertes Wasser kommuniziert.

Das erfindungsgemäße Verfahren zum Betreiben eines solchen Sandfilters zur Entfernung von Feststoffen aus einem Schmutzwasserstrom beruht darauf, dass ein aufrecht stehender Behälter mit einem unteren, einem mittleren und einem oberen Bereich vorgesehen wird, wobei der untere und mittlere Bereich mit einem partikelförmigen Filtermedium, beispielsweise Filtersand, befüllt sind und der obere Bereich gefiltertes Wasser enthält, das über einen Überlauf abgeführt wird und wobei der Schmutzwasserstrom in den Übergang zwischen dem unteren und mittleren Bereich eingebracht wird und in Richtung des oberen Bereiches durch das Filtermedium aufsteigt. Das Filtermedium selbst sinkt in entgegengesetzter Richtung zum unteren Bereich hinab und wird über ein zentrales, sich vom unteren bis in den oberen Bereich erstreckendes Steigrohr aus dem unteren Bereich in einen an einem oberen Ende des Steigrohrs angeordneten Wäscher gefördert, in welchem das im Steigrohr geförderte Filtermedium von aus dem oberen Bereich entnommenem Wasser gewaschen wird, dergestalt, dass das gewaschene Filtermedium auf den mittleren Bereich zurückgeführt und abgewaschene Schmutzpartikel über einen Waschwasserablauf ausgetragen werden, wobei die Förderung des Filtermediums im Steigrohr mit einem vertikal aufwärts in das Steigrohr gerichteten Wasserstrahl bewirkt wird. Erfindungsgemäß wird zur Lösung der eingangs gestellten Aufgabe im Rahmen dieses Verfahrens vorgesehen, dass der Wasserstrahl mit aus dem oberen Bereich entnommenem gefilterten Wasser erzeugt wird.

Auf diese Weise kann auf eine Förderung des Filtermediums zum Wäscher mittels Druckluft vollständig verzichtet werden, wobei durch die Förderung mit einem unter hohem Druck versprühten Wasserstrahl zudem das in das Steigrohr eingeführte Filtermedium bereits während seiner Förderung durch das Steigrohr eine intensive Reinigung seiner Oberflächen von anhaftenden Schmutzpartikeln erfährt, was die Reinigungswirkung signifikant verbessert.

Zur weiteren Steigerung dieser Reinigungswirkung innerhalb des Steigrohrs kann nach einem weiteren Vorschlag der Erfindung vorgesehen sein, dass das im Steigrohr geförderte Filtermedium bereichsweise von radial einwärts vorstehenden Mischern verwirbelt wird, wodurch die Ablösung von anhaftenden Schmutzpartikeln weiter gesteigert wird.

Das gefilterte Wasser zur Erzeugung des Wasserstrahls kann nach einem weiteren Vorschlag der Erfindung insbesondere aus dem Überlauf entnommen werden.

Die erzielte Geschwindigkeit der Bewegung des Filtermediums aus dem mittleren in den unteren Bereich und von dort in das Steigrohr kann auf einfache Weise durch eine Regelung des Volumenstroms und/oder des Drucks des Wasserstrahls geregelt werden.

Weitere Ausgestaltungen und Einzelheiten der Erfindung werden nachfolgend anhand von Ausführungsbeispielen in der Zeichnung erläutert. Es zeigen:
- Figur 1: in einer schematischen Schnittdarstellung eine Seitenansicht einer ersten Ausführungsform der Erfindung;
- Figur 2: in einer geschnittenen Seitenansicht eine zweite Ausführungsform der Erfindung;
- Figur 3: das Detail X gemäß Figur 1 in vergrößerten Maßstab;
- Figur 4: das Detail Y gemäß Figur 1 in vergrößerten Maßstab.

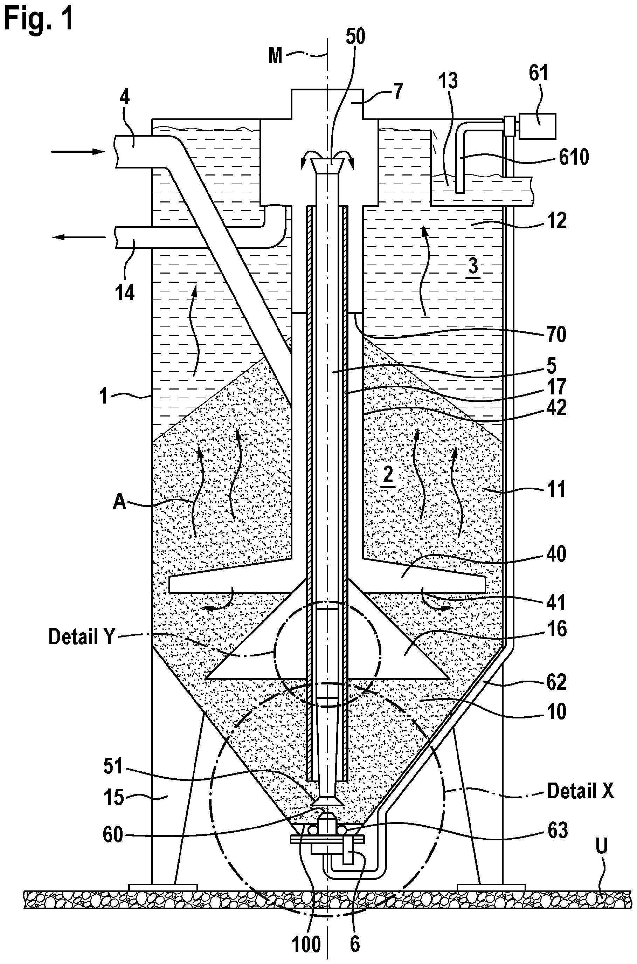

Aus der Figur 1 ist ein erstes Ausführungsbeispiel eines Sandfilters ersichtlich, der einen Behälter 1, beispielsweise aus Edelstahl, aufweist und für eine freistehende Aufstellung mittels Stützen 15 auf einem Untergrund U abgestützt ist.

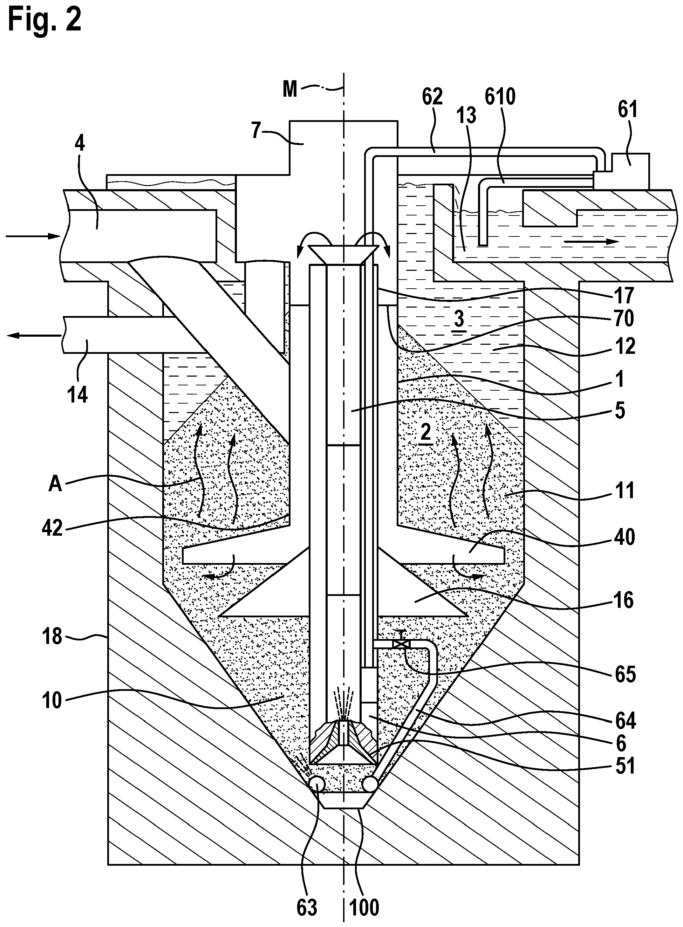

Im Gegensatz dazu zeigt das Ausführungsbeispiel gemäß Figur 2 eine zweite Ausführungsform eines solchen Behälters 1, der in einer hierfür vorgesehenen Grube 18 eingelassen ist.

Der Behälter 1 ist in drei übereinander angeordnete Bereiche unterteilt, wobei der obere Bereich mit Bezugszeichen 12, ein mittlerer Bereich mit Bezugszeichen 11 und ein unterer Bereich mit Bezugszeichen 10 gekennzeichnet sind. Die Bereiche sind nicht durch Einbauten oder andere bauliche Maßnahmen voneinander getrennt, sondern definieren sich dadurch, dass der mittlere und untere Bereich 11,10 mit einem partikelförmigen Filtermedium 2, beispielsweise geeignetem Sand befüllt sind, wobei der mittlere Bereich 11 von einem zylindrischen Abschnitt des der Behälterwandung 1 umgeben wird, während der untere Bereich 10 von einer konisch zu einer unterseitigen Spitze 100 zulaufenden Wandung begrenzt ist. Der obere Bereich 12 ist im Betrieb eines solchen Filters mit gefiltertem Wasser 3 befüllt.

Der von Feststoffen zu reinigende Schmutzwasserstrom gelangt per Druckleitung oder im freien Gefälle über ein seitlich einmündendes Zulaufrohr 4 in eine zentral auf der Mittelachse M des Sandfilters angeordneten Rohrabschnitt 42, an dessen unteren Ende radial nach außen abstehende Verteilarme 40 angeordnet sind, die unterseitig und/oder oberseitig mit Austrittsöffnungen 41 für den über das Zulaufrohr 4 zugeführten Schmutzwasserstrom ausgebildet sind. Die Austrittsöffnungen 41 sind im Übergang zwischen dem mittleren Bereich 11 und dem unteren Bereich 10 des Behälters 1 angeordnet.

Das aus den Austrittsöffnungen 41 austretende Schmutzwasser steigt durch die im mittleren Bereich 11 vorgehaltene Schicht an Filtermedium 2 hindurch vertikal nach oben gemäß Pfeilen A auf und wird dabei mittels des Filtermediums 2 von den abfiltrierbaren Stoffen, insbesondere Feststoffen getrennt, die in den Poren zwischen benachbarten Partikeln des Filtermediums 2 und auf deren Oberfläche festgehalten werden. Das solchermaßen gereinigte, klare Wasser 3 sammelt sich im oberen Bereich 12 und verlässt den Behälter 1 über den Überlauf 13 und eine daran anschließende Rohrleitung im oberen Bereich 12.

Da das Filtermedium 2 allmählich die zurückgehaltenen Feststoffe akkumuliert und dadurch verschmutzt und seine Filtrationsfähigkeit verringert, ist es erforderlich, die Partikel des Filtermediums 2 von den zurückgehaltenen Feststoffen zu waschen. Um dies zu ermöglichen, wird ein Kreislauf des Filtermediums 2 erzeugt, indem die Partikel des Filtermediums 2 entgegen der Aufstiegsrichtung A des Schmutzwasserstroms aus dem mittleren Bereich 11 allmählich in den unteren Bereich 10 absinken. Dazu wird das Filtermedium 2 im Bereich der unterseitigen Spitze 100 des Behälters mithilfe einer Pumpeinrichtung 6 aus dem unteren Bereich 10 entnommen und vertikal nach oben in ein Steigrohr 5 gefördert, welches sich exakt auf der Mittelachse M des Behälters 1 in vertikaler Richtung innerhalb eines Trägerrohrs 17 erstreckt, und zwar ausgehend von einer Eintrittsöffnung 51 im unteren Bereich 10 bis zu einem oberen Ende 50 im oberen Bereich 12 des Behälters 1.

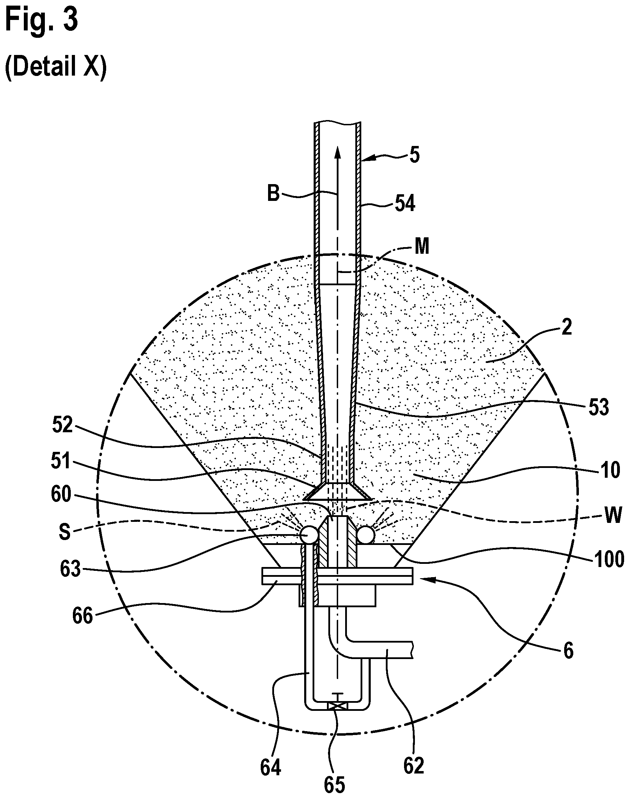

Um diese Förderung zu erreichen, umfasst die Pumpeinrichtung 6, wie insbesondere aus der Figur 3 ersichtlich, eine im Bereich der unterseitigen Spitze 100 mittels Flanschen 66 zentral angeordnete Wasserstrahldüse 60, die vertikal aufwärts auf der Mittelachse M in die Eintrittsöffnung 51 des Steigrohrs 5 weisend ausgerichtet ist. Die Wasserstrahldüse 60 wird über eine Entnahmeleitung 62 mit Wasser aus einer Hochdruck-Wasserpumpe 61 beaufschlagt, wobei die Hochdruck-Wasserpumpe 61 das von ihr geförderte Wasser über eine Saugleitung 610 aus dem Überlauf 13 für das gefilterte Wasser 3 im oberen Bereich 12 des Behälters 1 bezieht. Die Hochdruck-Wasserpumpe 61 entnimmt lediglich einen Teil des gefilterten Wassers 3 aus dem Überlauf 13, wobei der Volumenstrom und der Druck des sodann über die Entnahmeleitung 62 zur Wasserstrahldüse 60 geförderten Wassers einstellbar bzw. regelbar sind.

Die Entnahmeleitung 62 kann je nach baulichen Gegebenheiten außerhalb des Behälters 1 geführt sein, wie exemplarisch in der Figur 1 dargestellt, es ist jedoch auch möglich, diese innerhalb des Behälters 1 zu führen, wie es exemplarisch in der Figur 2 dargestellt ist, wobei die Zuordnung nicht von der Aufstellungsart des Behälters 1 abhängt.

In jedem Fall tritt das über die Entnahmeleitung 62 in die Wasserstrahldüse 60 geförderte gefilterte Wasser mit hoher Geschwindigkeit aus der Sprühdüse 60 gemäß Pfeil W aus und überwindet vertikal aufwärts gerichtet in freiem Flug die Wegstrecke bis zur mit einem gewissen Abstand zur Wasserstrahldüse 60 angeordneten und konisch verengten Eintrittsöffnung 51 des Steigrohrs 5. Der Abstand zwischen Wasserstrahldüse 60 und der Eintrittsöffnung 51 beträgt ein Vielfaches des durchschnittlichen Partikeldurchmessers des eingesetzten Filtermediums 2 und kann vom Fachmann empirisch ermittelt werden. Es wird insoweit eine Einzugsbereich für das Filtermedium 2 definiert, sodass im Bereich der konisch verengten Eintrittsöffnung 51 des Steigrohrs 5 ein Unterdruck entsteht, durch welchen das von der Wasserstrahldüse 60 versprühte Wasser gemeinsam mit den in der Umgebung befindlichen Partikeln des Filtermediums 2 in die konisch verengte Eintrittsöffnung 51 eingesaugt werden. Von dort werden sie vertikal aufwärts über einen Übergangsabschnitt 52 und einen hieran anschließenden konischen Erweiterungsabschnitt 53 in einen zylindrischen Rohrabschnitt 54 des Steigrohrs 5 gefördert, der bis zum oberen Ende 50 des Steigrohrs 5 reicht, sodass letztlich das in das Steigrohr 5 eingeförderte Wasser sowie das Filtermedium 2 vertikal nach oben in Pfeilrichtung B entlang der Mittelachse M im Steigrohr 5 bis zu dessen oberen Ende 50 aufsteigen. Dementsprechend rutschen die weitere, oberhalb liegende Schichten des Filtermediums 2 in den freiwerdenden Raum nach unten nach. Auf diese Weise wird eine kontinuierliche Bewegung des Filtermediums 2 nach unten erreicht, wobei durch Regelung des Volumenstroms und des Drucks des aus der Wasserstrahldüse 60 gemäß Pfeil W versprühten Wassers die Geschwindigkeit der Bewegung des Filtermediums regelbar ist.

Das innerhalb des Steigrohrs 5 bis zu dessen oberem Ende 50 geförderte Filtermedium 2 gelangt in einen am oberen Ende 50 des Steigrohrs 5 anschließenden Wäscher 7, der an seinem unterseitigen Ende 70 offen ausgebildet ist und von daher mit dem gereinigten Wasser im oberen Bereich 12 des Behälters 1 kommuniziert, und zwar derart, dass der Flüssigkeitsspiegel im Wäscher 7 niedriger ist als im den Wäscher 7 umgebenden oberen Bereich 12 des Behälters 1. Dadurch wird ein geringer Anteil an im oberen Bereich 12 enthaltenem gereinigten Wasser 3 dazu veranlasst, durch die unterseitige Öffnung am Ende 70 des Wäschers 7 in den Wäscher 7 einzuströmen.

Das Filtermedium 2, welches durch das Steigrohr 7 gefördert und im Wäscher 7 angekommen ist, fällt nach unten in das eingeströmte gefilterte Wasser und wird dabei von anhaftenden Schmutzpartikeln abgewaschen. Darüber hinaus werden die im Steigrohr 5 geförderten Partikel des Filtermediums 2 bereits während der Förderung im Steigrohr durch das mitgeführte und aus der Wasserstrahldüse 60 versprühte gereinigte Wasser intensiv umspült und gewaschen.

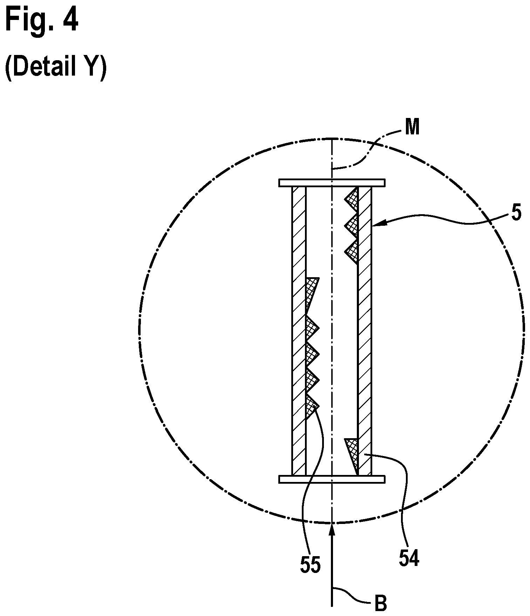

Eine Steigerung der Effizienz der bereits im Steigrohr 5 stattfindenden Wäsche des Filtermediums 2 kann darüber hinaus dadurch bewirkt werden, das vorzugsweise im zylindrischen Rohrabschnitt 54 des Steigrohrs 5, wie in Figur 4 dargestellt, radial nach innen vorstehende Mischer 55 vorgesehen sind, die das in Pfeilrichtung B vertikal nach oben im Steigrohr 5 aufsteigende Filtermedium 2 nebst eingesprühtem Wasser verwirbeln und eine turbulente Strömung erzeugen, welche die Trennung anhaftender Schmutzpartikel von den Partikeln des Filtermediums 2 fördert.

Das im Wäscher 7 anfallende verschmutzte Wasser verlässt den Wäscher 7 mitsamt der abgewaschenen Schmutzpartikel über einen Waschwasserablauf 14 und kann einer gesonderten Weiterbehandlung zugeführt werden.

Die solchermaßen von Feststoffen gereinigten Partikel des Filtermediums 2 fallen aus dem Wäscher 7 über das unterseitige Ende 70 wieder zurück auf das im mittleren Bereich 11 befindliche Filtermedium 2, sodass der Kreislauf geschlossen ist.

Auf diese Weise kann eine kontinuierliche Filtration ohne erforderliche Pausen für die Rückspülung des Filtermediums 2 durchgeführt werden.

Um der Bildung von Verklebungen, Verblockungen und Verklumpungen des bereits verschmutzten Filtermediums 2 im mittleren und/oder unteren Bereich 11, 10 vorzubeugen, ist unterhalb der Verteilerarme 40 ein Kegeleinsatz 16 vorgesehen, der für eine Auflockerung des Filtermediums unterhalb seiner Basis sorgt.

Sollte es gleichwohl zum Auftreten von Verklebungen, Verblockungen und/oder Verklumpungen des Filtermediums 2 im unteren Bereich 10 des Behälters 1 kommen, ist eine die Wasserstrahldüse 60 ringförmig umschließende Sprühleitung 63 vorgesehen, die über eine Abzweigleitung 64 mit Sprühwasser versorgt werden kann, welches aus der Entnahmeleitung 62 abgezweigt wird und die Sprühleitung 63 in Pfeilrichtung S verlässt. Die Aktivierung und Intensität des über die Sprühleitung 63 in Pfeilrichtung S versprühten Wasserstrahls zur Auflockerung des Filtermediums 2 kann über ein Ventil 65 gesteuert werden.

Die gesamte zur Sprühleitung 63 gehörende Apparatur kann gemäß Figuren 1 und 3 von unten am Flansch 66 montiert werden und ist dort leicht zugänglich.

### Bezugszeichenliste:

- 1:: Behälter
- 2:: Filtermedium
- 3:: gefiltertes Wasser
- 4:: Zulaufrohr
- 5:: Steigrohr
- 6:: Pumpeinrichtung
- 7:: Wäscher
- 10:: unterer Bereich
- 11:: mittlerer Bereich
- 12:: oberer Bereich
- 13:: Überlauf
- 14:: Waschwasserablauf
- 15:: Stützen
- 16:: Kegeleinsatz
- 17:: Trägerrohr
- 18:: Grube
- 40:: Verteilarme
- 41:: Austrittsöffnungen
- 42:: vertikaler Rohrabschnitt
- 50:: oberes Ende
- 51:: konische verengte Eintrittsöffnung
- 52:: Übergangsabschnitt
- 53:: konischer Erweiterungsabschnitt
- 54:: zylindrischer Rohrabschnitt
- 55:: Mischer
- 60:: Wasserstrahldüse
- 61:: Hochdruck-Wasserpumpe
- 62:: Entnahmeleitung
- 63:: Sprühleitung
- 64:: Abzweigleitung
- 65:: Ventil
- 66:: Flansch
- 100:: unterseitige Spitze
- 610:: Saugleitung

- A:: Aufstiegsrichtung Schmutzwasser
- U:: Untergrund
- S:: Sprührichtung des Sprühstrahls
- B:: Aufstiegsrichtung Filtermedium
- M:: Mittelachse
- W:: Sprührichtung des Wasserstrahls

## Patentansprüche

1. Sandfilter zur Entfernung von Feststoffen aus einem Schmutzwasserstrom, umfassend einen aufrecht stehenden Behälter (1) mit einem unteren, einem mittleren und einem oberen Bereich (10, 11, 12), wobei der untere und mittlere Bereich (10, 11) mit einem partikelförmigen Filtermedium (2) befüllt sind und der obere Bereich (12) gefiltertes Wasser (3) enthält, das über einen Überlauf (13) abführbar ist und wobei ein Zulaufrohr (4) zum Einbringen des Schmutzwasserstroms in den Behälter (1) vorgesehen ist, welches im Übergang zwischen dem unteren und mittleren Bereich (10, 11) endet und ein zentrales, sich vom unteren bis in den oberen Bereich erstreckendes Steigrohr (5) mit einer Pumpeinrichtung (6) für die Förderung von Filtermedium (2) aus dem unteren Bereich (10) in einen am oberen Ende (50) des Steigrohrs (5) angeordneten Wäscher (7) vorgesehen ist, mittels dessen das im Steigrohr (5) geförderte Filtermedium (2) von aus dem oberen Bereich (12) entnehmbarem gefilterten Wasser (3) waschbar ist, dergestalt, dass das gewaschene Filtermedium auf den mittleren Bereich (11) zurückführbar und abgewaschene Schmutzpartikel über einen Waschwasserablauf (14) austragbar sind, wobei die Pumpeinrichtung (6) von einer Wasserstrahlpumpe mit einer vertikal aufwärts in das Steigrohr (5) gerichteten Wasserstrahldüse (60) ausgebildet ist, **dadurch gekennzeichnet, dass** die Wasserstrahldüse (60) über eine Hochdruck-Wasserpumpe (61) und eine Entnahmeleitung (62) für gefiltertes Wasser (3) mit dem oberen Bereich (12) kommuniziert und mit gefiltertem Wasser (3) beaufschlagbar ist.

2. Sandfilter nach Anspruch 1, **dadurch gekennzeichnet, dass** der Behälter (1) im unteren Bereich (10) kegelförmig zu einer unterseitigen Spitze (100) hin verjüngend ausgebildet ist und die Wasserstrahldüse (60) im Bereich der unterseitigen Spitze (100) angeordnet ist.

3. Sandfilter nach Anspruch 1 oder 2, **dadurch gekennzeichnet, dass** das Steigrohr (5) unter Belassung eines Eintrittsraumes (8) für Filtermedium von der Wasserstrahldüse (60) beabstandet ist und sich in einer Eintrittsrichtung des versprühten Wasserstrahls (W) betrachtet zunächst konisch verengt und anschließend konisch bis zu einem bis zum Wäscher (7) reichenden zylindrischen Rohrabschnitt (54) erweitert.

4. Sandfilter nach einem der Ansprüche 1 bis 3, **dadurch gekennzeichnet, dass** benachbart zur Wasserstrahldüse (60) eine schaltbare Sprühleitung (63) vorgesehen ist, die mit gefiltertem Wasser (3) aus der Entnahmeleitung (62) beaufschlagbar ist.

5. Sandfilter nach Anspruch 4, **dadurch gekennzeichnet, dass** die Sprühleitung (63) ringförmig um die Wasserstrahldüse (60) verläuft.

6. Sandfilter nach einem der Ansprüche 1 bis 5, **dadurch gekennzeichnet, dass** das Steigrohr (5) bereichsweise mit radial innenseitig vorstehenden Mischern (55) ausgebildet ist.

7. Sandfilter nach einem der Ansprüche 1 bis 6, **dadurch gekennzeichnet, dass** die Entnahmeleitung (62) mit dem Überlauf (13) für gefiltertes Wasser (3) kommuniziert.

8. Verfahren zum Betreiben eines Sandfilters zur Entfernung von Feststoffen aus einem Schmutzwasserstrom, der einen aufrecht stehenden Behälter (1) mit einem unteren, einem mittleren und einem oberen Bereich (10, 11, 12) umfasst, wobei der untere und mittlere Bereich (10, 11) mit einem partikelförmigen Filtermedium (2) befüllt sind und der obere Bereich (12) gefiltertes Wasser (3) enthält, das über einen Überlauf (13) abgeführt wird und wobei der Schmutzwasserstrom in den Übergang zwischen dem unteren und mittleren Bereich (10, 11) eingebracht wird und in Richtung des oberen Bereiches (12) durch das Filtermedium (2) aufsteigt und das Filtermedium (2) in entgegengesetzter Richtung zum unteren Bereich (10) hin absinkt und über ein zentrales, sich vom unteren bis in den oberen Bereich erstreckendes Steigrohr (5) aus dem unteren Bereich (10) in einen an einem oberen Ende (50) des Steigrohrs (5) angeordneten Wäscher (7) gefördert wird, in welchem das im Steigrohr (5) geförderte Filtermedium (2) von aus dem oberen Bereich (12) entnommenem Wasser (3) gewaschen wird, dergestalt, dass das gewaschene Filtermedium (2) auf den mittleren Bereich (11) zurückgeführt und abgewaschene Schmutzpartikel über einen Waschwasserablauf (14) ausgetragen werden, wobei die Förderung des Filtermediums (2) im Steigrohr (5) mit einem vertikal aufwärts in das Steigrohr (5) gerichteten Wasserstrahl bewirkt wird, **dadurch gekennzeichnet, dass** der Wasserstrahl mit aus dem oberen Bereich entnommenem gefilterten Wasser (3) erzeugt wird.

9. Verfahren nach Anspruch 8, **dadurch gekennzeichnet, dass** das im Steigrohr (5) geförderte Filtermedium (2) bereichsweise von radial einwärts vorstehenden Mischern (55) verwirbelt wird.

10. Verfahren nach einem der Ansprüche 8 oder 9, **dadurch gekennzeichnet, dass** das gefilterte Wasser (3) zur Erzeugung des Wasserstrahls aus dem Überlauf (13) entnommen wird.

11. Verfahren nach einem der Ansprüche 8 bis 10, **dadurch gekennzeichnet, dass** der Volumenstrom und/oder der Druck des Wasserstrahls geregelt werden.
